# EUROPEAN PATENT SPECIFICATION

(11) **EP 3 543 045 B1**
(45) Date of publication and mention of the grant of the patent: **16.06.2021**
(21) Application number: 19155995.4
(22) Date of filing: 04.05.2010
(51) Int. Cl.: B60G 17/0165, B60G 17/08, B62K 25/04, F16F 9/44, F16F 9/06, B62K 25/28, F16F 9/46, B60G 17/016, B60G 15/12

(54) **SUSPENSION SYSTEM FOR A VEHICLE**
AUFHÄNGUNGSSYSTEM FÜR EIN FAHRZEUG
SYSTÈME DE SUSPENSION POUR UN VÉHICULE

(30) Priority: 04.05.2009 US 17542209 P
(43) Date of publication of application: 25.09.2019
(62) Divisional of application: 15167426.4
(73) Proprietor: Fox Factory, Inc., Scotts Valley, CA 95066 (US)
(72) Inventor: GALASSO, Mario, CT 06482 (US); FOX, Robert C., CA 95030 (US); HAUGEN, David M., CA 93950 (US); KASWEN, Robert David, CA 95076 (US)
(74) Representative: Casbon, Paul Richard

(56) References cited:
- EP-A1- 1 241 087
- DE-A1- 3 738 048
- JP-A- 2007 302 211
- US-A- 5 884 921
- US-A1- 2003 160 369
- US-A1- 2004 222 056
- US-A1- 2006 065 496
- US-A1- 2006 289 258
- US-A1- 2008 059 025
- US-B1- 6 254 067
- US-B1- 7 287 760

## Description

The present invention relates to a suspension system and to a vehicle comprising the suspension system.

Integrated damper / spring vehicle shock absorbers often include a damper body surrounded by a mechanical spring. The damper often consists of a piston and shaft telescopically mounted in a fluid filled cylinder. The mechanical spring may be a helically wound spring that surrounds the damper body. Various integrated shock absorber configurations are described in U.S. patent nos. 5,044,614; 5,803,443; 5,553,836; and 7,293,764. The shock absorber of U.S. Patent 7,293,764 is shown, in exploded view, therein in Figure 7. As shown, the shock absorber comprises a damper assembly 60 and a helical spring 65. Noteworthy is that the wound wire forming the helical spring 65 includes abrupt ends 70.

U.S. Patent No. 5,044,614 ("614 patent") shows a damper body carrying a thread 42. A helical spring 18 surrounds the damper body. The compression in the helical spring 18 may be pre-set by means of a nut 48 and a lock nut 50. The nut 48 may be translated axially relative to the body ("tube") 16 and thread 42 by rotating the nut 48 around the threaded sleeve 42. Rotation of the nut 48 in a given direction (e.g. clockwise as viewed from end 44 for a right hand thread 42) will cause the nut to move toward the retainer clip 26 thereby compressing spring 18 between the nut 48 and the retainer clip 26. Once the spring 18 is in a desired state of compression, lock nut 50 is rotated, using a wrench, up against nut 48 and tightened in a binding relation therewith.

Some shock absorbers utilize gas as a spring medium in place of, or in addition to, mechanical springs. Gas spring type shock absorbers, having integral dampers, are described in U.S. patent nos. 6,135,434; 6,360,857 and 6,311,962. Patent number 6,360,857 shows a shock absorber having selectively adjustable damping characteristics. US Patent no 7,163,222 describes a gas sprung front shock absorber for a bicycle (a "fork") having a selective mechanical "lock out" and adjustable mechanical "blow off' function. For purposes herein reference to a shock absorber includes front shock absorbers, or forks, of two (or some three) wheeled vehicles.

The spring mechanism (gas or mechanical) of some shock absorbers is adjustable so that it can be preset to varying initial states of compression. In some instances the shock spring (gas or mechanical) may comprise different stages having varying spring or damping rates thereby giving the overall shock absorber a compound spring rate depending varying through the stroke length. In that way the shock absorber can be adjusted to accommodate heavier or lighter carried weight, or greater or lesser anticipated impact loads. In vehicle applications including motorcycle and bicycle applications and particularly off-road applications, shock absorbers are pre-adjusted to account for varying terrain and anticipated speeds and jumps. Shocks are also adjusted according to certain rider preferences (e.g. soft - firm).

A type of integrated spring / damper shock absorber, having a gas spring, is shown in Figure 28, for example, of US patent no. 7,374,028. The shock of Figure 28 also includes an "adjustable intensifier assembly 510." That intensifier or "reservoir" accepts damping fluid from chamber 170 as the fluid is displaced from that chamber by the incursion of rod 620 into chamber 170 during a compression stroke of the shock. The intensifier valve assembly regulates flow of damping fluid into and out of the reservoir and an embodiment of the valve assembly is shown in Figure 17 of that document.

It is desirable to "lock" the suspension, thereby rendering it substantially rigid, on certain vehicles at certain times. Such a lock may be particularly desirable on bicycles to reduce or eliminate so called "pedal bob" or "chain squat" (the cyclic compression and extension of suspension caused by the cyclic tension of the drive chain and the cyclic motion of the pedals, cranks and power input generally), often caused when cycling uphill. Once the period of pedal bob has finished it is desirable to "unlock" the suspension, so that a flat or downhill section can be negotiated at higher speed. It is noteworthy that the valve assembly of Figure 17 of US 7,374,028 may be replaced with any suitable valve assembly depending on the desired result. For example, when the valve is configured (as will be further described herein) with a selectable and correspondingly selected "lock out" (i.e. functionally absolute valve closure) damping fluid is excluded from entering the reservoir and, the damping fluid being a relatively incompressible liquid, such exclusion prevents the volume of chamber 170 from being reduced and thereby prevents the shock absorber from compressing telescopically. Such "lock out" is selectively provided via an external direct mechanical manual adjuster, such as for example knob 512 of Figure 17 of US 7,374,028.

One particular problem with direct adjust selective lock out functionality on bicycles is that it is very difficult (in some cases impossible) for a rider to lock and unlock the damping function of the front and/or rear damper whilst riding the bicycle. It is difficult and dangerous to release grip on the handlebars particularly when the terrain is changing but that is often precisely the time when locking or locking of suspension would be desirable. Usually the rider has to stop, possibly dismount, and then lock or unlock the damper.

A similar problem also exists on other vehicles such as trucks, ATVs, off-road motorcycles, etc. Any such vehicle that is capable of driving both on road and off road (i.e. on one type of terrain that is relatively smooth compared to another type of surface that can be relatively rough) usually has suspension with a larger range of travel than a vehicle intended exclusively for on road use. When moving from off-road to on road and vice versa there is no way, absent stopping and dismounting or exiting the vehicle, for the driver to lock and unlock the suspension to provide for better ride and handling according to the terrain.

US 2004/222056 A1 discloses a damper closest to that of the invention including a valve movable between an open position and a closed position to selectively alter the compression damping rate of the shock absorber. The valve may include a self-centering feature that operates to keep the valve body centered about the valve shaft. The damper may also include a timer feature, which retains the valve in an open position for a predetermined period of time after it is initially opened.

### SUMMARY OF THE INVENTION

According to the present invention there is provide a vehicle as set out in claim 1. Further features of the vehicle are set out in claims 2 to 11 to which attention is hereby directed.

According to another aspect of the present invention there is provide a vehicle suspension system as set out in claim 12. Further features of the vehicle are set out in claims 13 to 15 to which attention is hereby directed.

According to some embodiments there is provided a suspension system for a vehicle, which suspension system comprises:
a damping assembly operatively connected to an actuator;
a controller for controlling movement of said actuator whereby a damping rate of said damping assembly is adjusted by movement of the actuator; and
a signal generating device remote from said damping assembly, which device, in use, provides an output signal representing a desired adjustment to the damping rate of said damping assembly, said controller adapted to receive said signal and control said actuator to adjust said damping rate according to said signal, whereby said damping rate may be remotely altered during use of said vehicle. In some embodiments the controller may be a microcontroller or other processing device e.g. ASIC. In some aspects the controller may be of a simpler form and might be integrated with the actuator; for example the controller can be a circuit that controls the actuator in response to 'high' and 'low' voltage from the device. In some embodiments the device is a user operable device such as a manual switch or lever triggering a circuit to send an electrical signal. In some embodiments the device comprises an accelerometer for sensing changes in the terrain being traversed and sending a damping change signal to the controller in response to such changes. In some embodiments the device comprises both a sensor (e.g. accelerometer) or sensors and a manually operable switch in parallel where the sensor may signal the controller or the manual switch may be operated to signal the controller.

In certain aspects said controller is arranged to control said actuator so that said damping assembly is either locked or unlocked, whereby in use, operation of said signal generating device switches said damping assembly rate only between a desired damping rate and a minimum damping rate. In this way the user of the vehicle may very easily lock (minimum) and unlock (regular or desired damping) the damping assembly, and there may be no intermediate adjustment positions of the damping rate based on the signals from the device(s) (i.e. the adjustment of the damping assembly is either locked or unlocked). The signal generating device may comprise a button that toggles the damping assembly between locked and unlocked. For vehicles having multiple wheels, each individual wheel suspension may be controlled based on a discreet signal generated by the device where the device includes, in addition to the signal generating trigger switch, a selector switch for designating a channel or mode corresponding to the immediately desired suspension unit or units. As an example a bicycle may include a signal generating switch having a toggle for selecting between the front and rear shock absorbers or for selecting "both" (thereby allowing the signal to trigger the actuator in each with only one operation of the switch). These easy-to-operate arrangements are particularly advantageous in off-road conditions where the user (e.g. a rider to a trail bike, mountain bike or other ATB or vehicle) must keep full concentration (and both hands engaged) on steering the vehicle.

In some aspects said controller (e.g. circuit 65) is arranged to control said actuator so that said damping assembly may be moved to at least one position between a locked position and an unlocked position, whereby said signal generating device (such as manual override switch 50) may be used to set said damping rate at values between a maximum (or regular/desired) and a minimum. In these embodiments, the user has more fine control over the damping rate of the damping assembly, and may choose to position the damping assembly somewhere between unlocked and locked positions. The signal generating device may comprise an analogue or digital interface for achieving this functionality. For example, the signal generating device may comprise a lever whose position between two limits corresponds to the position of the damping assembly. Alternatively, the signal generating device may comprise a digital display indicating the amount that the damping assembly is open/closed, with 'up' and 'down' buttons (e.g. on touch screen display, or physical buttons) for changing the damping rate.

In certain aspects said at least one position comprises a number of indexed positions between said locked and unlocked positions. Thus the rider may have a number of preset positions and the signal generating device may switch the damping assembly between these positions in a similar way to index shift gears.

In other embodiments said damping assembly may be moved to substantially any position between said locked and fully unlocked positions. In this way the damping rate may be 'infinitely' adjustable between the fully open and closed positions. This may be achieved with an analogue or digital user-operable switch as described above.

In some aspects the signal generating device comprises a sensor for providing a movement signal indicating movement of one part of the vehicle relative to another part during movement across terrain, said controller configured to receive said movement signal and to automatically control said damping rate in response thereto. In certain embodiments, the sensor comprises one or more vibration or impact sensor (or sensors such as sensor 5, sensor 35, pedal force sensor or any suitable combination), such as a single axis accelerometer, although accelerometers with more than one axis are useable. The automatic control may be to lock or unlock the damping assembly in response to sensed movement. For example, it may be provided automatically in response to some predetermined and sensed vehicle operation condition (e.g. smooth terrain). Alternatively, a "lock out" condition may be the default mode for the suspension whereby the suspension becomes active only upon some predetermined and sensed vehicle operation condition (e.g. rough terrain). In other embodiments the automatic control may adjust the damping rate either between indexed positions or anywhere between ('infinitely' variable) the unlocked and locked conditions as described above.

In certain aspects said automatic control may be overridden and/or adjusted by a user-operable device (e.g. manual override switch 50) remote from said signal generating device.

In some aspects said signal generating device comprises a user-operable device reachable during use of the vehicle.

In some aspects said signal generating device comprises a wireless device for transmitting said output signal (e.g. as an electromagnetic signal) and said controller comprises a wireless receiver for receiving said output signal.

In some aspects the suspension system comprises a wired connection between said signal generating device and said controller, said wired connection useable to transmit said output signal therebetween.

In certain embodiments said damping assembly comprises an intensifier and said actuator is moveable to adjust the effect of said intensifier on said damping rate.

In some aspects said actuator comprises a coil and a winding for moving a member, the position of said member controlling rate of fluid flow during compression/expansion of said damping assembly. The controller may cause a current to be passed through the winding in response to the output electric signal from the user-operable switch, thereby locking or unlocking the damping assembly (or setting its damping rate somewhere between),

In some aspects said vehicle comprises a bicycle, such as a trail bike, mountain bike or ATB, and said signal generating device is located in a position on said bicycle reachable by the rider during use.

The application of the invention is not limited to bicycles, but may also find application in other off road vehicles such as motorcycles, ATVs, 4WD dune buggies, watercraft, snowmobiles, etc.

According to some other aspects there is provided a vehicle suspension lock out system comprising:
a suspension having an outer tube and an inner shaft, or tube, the outer and inner tubes disposed telescopically relative to each other;
a locking mechanism operatively connected to one of the outer and inner tubes and having a first position wherein the outer and inner tubes are relatively movable and a second position wherein the outer and inner tubes are substantially immovable relatively;
an actuator configured to move the locking mechanism between the first and second positions in at least one direction;
a signal generator remote from the actuator wherein an output from the signal generator is receivable by the a receiving portion of the actuator and the actuator moves the locking mechanism in response to receipt of the output; and
a power source for providing power to the actuator. In certain aspects the power source may comprise a power generating mechanism that converts kinetic energy into electrical energy during use of the vehicle, e.g. bicycle.

In certain aspects the signal generator comprises a manually operable control mounted in proximity to an operator of the vehicle.

In some aspects the locking mechanism comprises a damping fluid valve.

In some aspects the damping fluid valve separates a damping fluid compression chamber and a damping fluid reservoir.

In some aspects the damping fluid valve separates a damping fluid compression chamber and a damping fluid rebound chamber.

In some aspects a movable piston within the damping fluid chamber comprises the damping fluid valve

In certain embodiments the actuator comprises a magnet and a winding.

In other aspects the signal generator comprises an accelerometer.

In some aspects the signal generator comprises at least one sensor and at least one manually operable control.

In some aspects the manually operable control comprises a selector for directing a channel or mode of operation of the control.

In some embodiments the operative connection comprises a damping fluid flow tube.

According to some other aspects there is provided a vehicle suspension system comprising:
at least one damper for metering fluid;
at least one remotely operable valve adjacent to and in fluid communication with the damper, the valve movable between open and closed positions for affecting the operation of the damper;
at least one device for operating the valve from a remote location on the vehicle, the device constructed and arranged to communicate with the valve via at least one electronic signal based upon a condition at the device.

In certain aspects the device is a switch and the condition includes manual manipulation of the switch by a user.

In other aspects the device is a sensor and the condition is a road condition acting upon the suspension system.

In some embodiments the sensor is an accelerometer and the condition is an impact force on the suspension system.

In some aspects a first valve operates in conjunction with a rear shock and a second valve operates in conjunction with a front shock of the vehicle.

According to certain aspects there is provided a vehicle suspension comprising:
a terrain sensor;
an adjustable damping assembly; and
a processor directing a position of the damping assembly in response to input from the terrain sensor.

According to another aspect there is provided a method for adjusting a vehicle suspension comprising:
manually adjusting a suspension adjuster;
wirelessly sending a signal from the adjuster to a processor; and
directing a power source to alter a power output to the suspension.

### BRIEF DESCRIPTION OF THE FIGURES

For a better understanding of how the invention may be put into practice, preferred embodiments of the invention applied to a bicycle will be described, by of example only, with reference to the accompanying drawings, in which:
Fig. 1 is a schematic side view of a bicycle comprising a damper according to the present invention;
Fig. 2A is a side view in cross section of one embodiment of a damper according to the present invention;
Fig. 2B is an enlarged view of part of the damper of Fig. 2A; and
Fig. 3 is a schematic block diagram of components of one embodiment of an electric lock out apparatus according to the present invention.

### DETAILED DESCRIPTION OF THE PREFERRED EMBODIMENTS

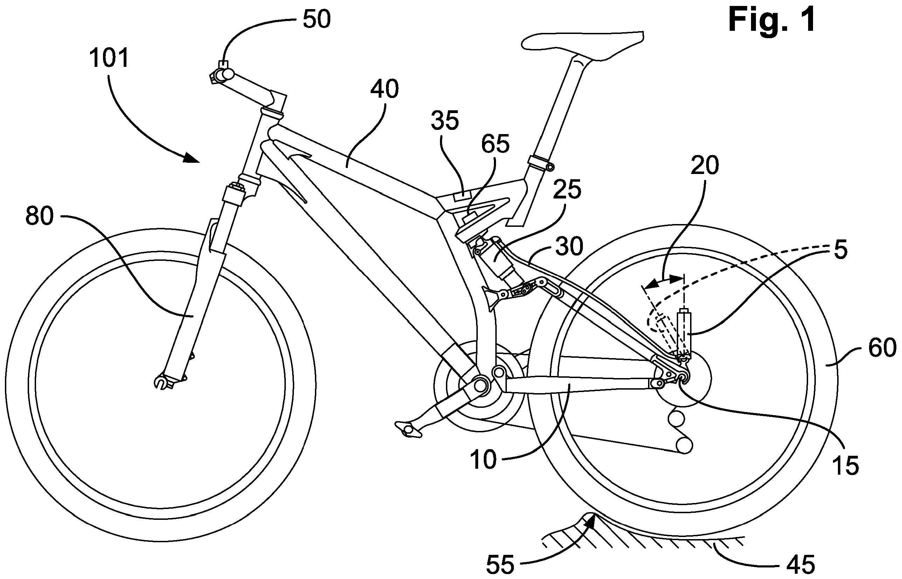

Referring to Figure 1, a bicycle generally identified by reference numeral 101 comprises a frame 40 and front forks 80. In this embodiment the frame 40 has a suspension system comprising a swing arm assembly 10 that, in use, is able to move relative to the rest of the frame; this movement is permitted by inter alia a rear shock absorber or damping assembly 25. The front forks 80 also provide a suspension function via a damping assembly in each fork leg; as such the bicycle 101 is a full suspension bicycle (such as an ATB or mountain bike), although the invention is not limited to use on full suspension bicycles. In particular the term 'suspension system' is intended to include bicycles having front suspension or rear suspension only, or both.

A sensor 5 is positioned proximate a rear axle 15 of a bicycle 101 for sensing changes in terrain. As shown in Figure 1, the sensor 5 is mounted on the swing arm assembly 10 proximate the rear axle 15 of the bicycle 101. The angular orientation of the sensor 5 is movable through range 20 (and is shown in each of two possible limit positions), thereby allowing alteration of a force component sensed by the sensor in relation to a force (vector) input into the swing arm assembly 10. A preferred value for the range 20 is approximately 120°, and more preferably 100°. It is understood that the sensor 5 may be moved or mounted in any suitable configuration and allowing for any suitable range of adjustment as may be desirable. That is useful for adjusting the sensitivity of the sensor to various anticipated terrain and bicycle speed conditions (the bicycle speed affects the vector magnitude of a force input to the bicycle wheel for constant amplitude terrain disparity or "bump / dip." Varying size bumps and dips also affect the vector input angle to the wheel for constant bicycle speed).

The sensor 5 (and sensor 35 and pedal force sensor) may be any suitable force or acceleration transducer (e.g. strain gage, wheatstone bridge, accelerometer, hydraulic, interferometer based, optical, thermal or any suitable combination thereof). The sensor 5 may utilize solid state electronics, electro-mechanical principles or MEMS, or any other suitable mechanisms. In one embodiment the sensor 5 comprises a single axis self powered accelerometer, such as for example ENDEVCO(RTM) model 2229C. The 2229C is a comparatively small device with overall dimensions of approximately 15mm height by 10mm diameter, and weighs 4.9g. Its power is self-generated and therefore the total power requirements for the bicycle 101 are reduced; this is an important advantage, at least for some types of bicycle, where overall weight is a concern. An alternative single axis accelerometer is the ENDEVCO(RTM) 12M1A, which is of the surface-mount type. The 12M1A is a single axis accelerometer comprising a bimorph sending element which operates in the bender mode. This accelerometer is particularly small and light, measuring about 4.5mm by 3.8mm by 0.85mm, and weighs 0.12g. In other embodiments, the sensor 5 may be a triaxial accelerometer such as the ENDEVCO(RTM) 67-100. This device has overall dimensions of about 23mm length and 15mm width, and weighs 14g.

The sensor 5 may be attached to the swing arm assembly 10 directly, to any link thereof, to an intermediate mounting member (not shown) or to any other portion or portions of the bicycle 101 as may be useful. In one embodiment a sensor 5 is fixed to an unsprung portion of the bicycle 101, such as for example the swing arm assembly 10, and another sensor 35 (such as an accelerometer as described above) is fixed to a sprung portion of the bicycle 101, such as the frame 40. Sensors may be integrated with the vehicle structure and data processing system as described in US patent nos. 6,863,291; 4,773,671; 4,984,819; 5,390,949; 5,105,918; 6,427,812; 6,244,398; 5,027,303 and 6,935,157. Sensors and valve actuators (e.g. electric solenoid or linear motor type - note that a rotary motor may also be used with a rotary actuated valve) may be integrated herein utilizing principles outlined in SP-861-Vehicle Dynamics and Electronic Controlled Suspensions SAE Technical Paper Series no. 910661 by Shiozaki et. al. for the International Congress and Exposition, Detroit, Michigan, February 25 - March 1, 1991.

As mentioned above, the rear shock absorber 25 is operatively mounted between an unsprung portion of the bicycle 101, such as the swing arm assembly 10 and rear axle 15, and a sprung portion of the bicycle 101 such as the frame 40. A representative example embodiment of shock absorber 25 derives from a modification, as disclosed herein, of the shock absorber shown in Figure 28 of, and elsewhere in, US patent no. 7,374,028 (the "'028" patent) .

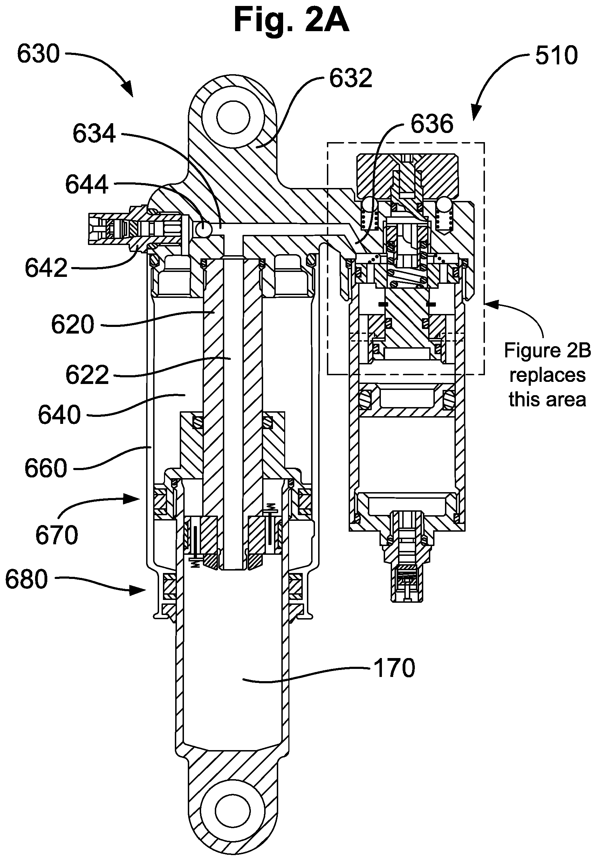

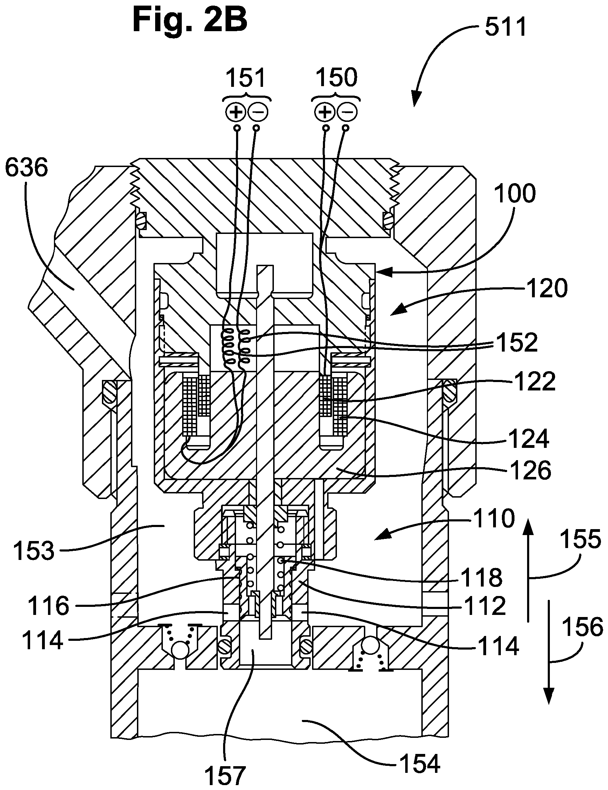

Referring to Figure 2A herein (from the '028 patent), intensifier assembly 510 is shown in conjunction with damper assembly 630. Figure 2B shows an embodiment of an intensifier valve 511 for use with the principles disclosed herein. As shown in Fig. 2A the intensifier valve 511 of Figure 2B replaces the assembly 510, as shown in Figures 15, 17 and elsewhere in the '028 patent. The intensifier valve 511 is operable in response to electric signal and is capable of being modulated or throttled for selective full opening, closing and intermediate opening or "throttle" positions. The intensifier valve 511 comprises a valve portion 110 and an actuator portion 120. The valve portion 110 may include a cylinder 112 with one or more variable orifices 114 and a member (e.g. piston) 116 that moves within the cylinder 112 to control the opening of the orifice(s) 114. The valve 100 is in a closed position when the piston 116 is covering the orifice(s) 114. The valve 100 is in an open position when the piston 116 moves away from the orifice(s) 114 such that at least a portion of the orifice(s) 114 is opened. In the open position, fluid may flow into the valve portion 110 and may flow out of the valve portion 110. The position of the piston 116 relative to the orifice(s) 114 varies the orifice opening and the flow through the valve portion 110. The valve 100 may thus provide an output pressure in response to an input flow.

The valve portion 110 may also include a spring 118 that applies a force against the piston 116 to bias the piston 116 toward the closed position. Fluid pressure against the piston 116 may result in a force that exceeds the spring force causing the piston 116 to move and open the orifice(s) 114.

The actuator portion 120 may also apply a force to the piston 116. The actuator portion 120 may advantageously be back drivable to permit the pressure term to push open the valve, for example, during the onset of a high shock event. One embodiment of the actuator portion 120 is a voice coil type linear actuator including a voice coil 122, a magnet 124, and a back iron 126. The back iron 126 is coupled to the piston 116 such that linear movement of the back iron 126 causes linear movement of the piston 116.

The actuator portion 120 may be controlled using a command such as a voltage command, for example, provided by drive electronics (not shown). A voltage command or signal to the actuator portion 120 causes current to flow through the coil 122, creating a magnetic field that applies a force to the magnet 124 and back iron 126. Different voltage commands may thus correspond to different amounts of force applied to the piston 116 in the valve 100. In one embodiment the signals and actuator are configured to move the valve completely between a full open ('unlocked') and a full closed position ('locked') thereby allowing the damper to move or substantially locking it, i.e. adjusting the damping rate of the damping assembly 630 between minimum and maximum respectively.

Although one exemplary valve is shown, those skilled in the art will recognize that other types of pressure relief valves may be used. Although the exemplary actuator 120 is a voice coil type linear actuator, those skilled in the art will recognize that other types of actuator technologies may be used. For example, the sensors, switches, controllers, actuators and other operative elements hereof may comprise optical circuitry and as such the power source may comprises an optical (or other electromagnetic) generator such as a "LASER" and wiring and circuits used herein may comprises fiber optic and optic circuitry including Bragg grating technology and other suitable "electrical equivalents." The elements hereof may be operable in whole or in part based on sonic wave or microwave transmission and suitable waveguide technology may be employed.

It should also be noted that 122 and 124 are interchangeable such that the voice coil may be either 122 or 124 and the magnet may be the other of 122 and 124 respectively. The voice coil 122 or 124 responds to input current from the power circuit (e.g. position control circuit or other suitable electrical input as described herein). As such input wiring is desirable. The input wiring and terminals for the 122 version of the voice coil is shown at 150. The input wiring and terminals for the 124 version of the voice coil is shown at 151 and includes windings 152 to accommodate extension and contraction of the throughput wires 152 during operation of the valve 100

The valve 100 is shown in a closed, or downward 156, position. As such, piston 116 fully obstructs orifices 114 thereby preventing fluid from flowing from damper assembly 630, through channel 636, into upper chamber 153, through orifice 114, through valve outlet 157 and into floating piston compensator chamber 154. When current of an appropriate magnitude is applied to the voice coil 122 or 124, the magnet electromagnet combination of 122 and 124 causes the back iron 126, and correspondingly the valve piston 116, to move upward 155 in an amount proportional to the voice coil input. Such upward 155 movement is against spring 118, which biases the valve piston 116 downward 156 (i.e. toward closed), and therefore when the voice coil input balances with the force of spring 118, movement of the piston 116 will stop and the valve 100 will be correspondingly throttled.

In operation, the sensor 5 (and / or 35) outputs a voltage change corresponding to an input force (for example the outputs from both sensors may be reconciled in a controller (described in greater detail below), such as a microprocessor, having an algorithm for weighting their respective inputs and generating a resulting singular command or signal based on a predetermined logic). In one embodiment the sensor 5 senses input force along a prescribed axis 20. A bump in the terrain 45 typically exerts a force 55 on a bicycle wheel. The angle of the resolved force 55 relative to the tire/wheel 60 is typically normal (substantially) to the tire/wheel 60 at the point of impact. That force 55 then imparts a component of the impact 55 to the axle 15 as dictated by the swing arm assembly 10. That component can be sensed by the sensor 5 at a magnitude corresponding to the orientation of the sensor axis 20. The sensor axis orientation can be adjusted by the user and/or bicycle manufacturer to make the sensor more or less sensitive (by imparting more or less of the impact 55 to the axis 20) to bumps and dips in the terrain.

It is envisaged that there are various ways the remote lock/unlock function of the rear shock absorber 25 and/or front shock absorber 80 may be provided on the bicycle 101. In particular, remote lock/unlock may be entirely automatically controlled by a controller 65 in response to the input from the sensor 5 when the bicycle 101 is in use. Optionally, the user may be able override and/or adjust this automatic control using a device 50. In another embodiment, the remote lock/unlock of the rear shock absorber 25 (and/or front shock absorber 80) may be entirely controlled at the user's discretion using the device 50; in such an embodiment the sensor 5 need not be provided on the bicycle 101 and the user locks and unlocks the suspension system according to his or her own preferences at the time.

Referring additionally to Figure 4, a block diagram shows components of embodiments used to implement fully automatic control with optional manual override. In use, when the sensor 5 puts out, for example, a voltage corresponding to a bump (and/or optionally a dip) that voltage is transmitted to the controller 65 (e.g. comprising a memory and a processor/microprocessor, or an ASIC). In one embodiment the rear shock absorber 25 (comprising damper 630 and intensifier 510) of Figures 2, including valve 511, is responsive to signals and power transmitted from the controller 65. The valve 511 is default in the closed position and will throttle open corresponding to power input received at terminals 150. The controller 65 compares the output voltage of sensor 5 to a preset (by means of threshold adjuster 75 such as, for example, a potentiometer) voltage value and if that value is exceeded, the controller 65 routes a predetermined amount of power from the power source 70 (e.g. suitable battery, capacitor, photovoltaic generator or other suitable mechanism or combination thereof) to the valve 511. Optionally the controller 65 compares the output voltage to a magnitude comparator value over time (the time constant is also user adjustable). In that option the magnitude of the output voltage must remain above a given threshold value for a predetermined amount of time before the controller 65 will route power to the valve 511. When the output voltage falls below the threshold value, power to the valve 511 is shut off. Optionally, the controller 65 may taper power off over a selectable period of time as part of the shut off function. Optionally, multiple threshold values may be set in the controller 65. At each threshold value may direct a differing amount of power from the source 70 to the valve 511. If, for example, only a lower threshold is met, the controller 65 may direct an amount of power only corresponding to a partial opening of the valve 511. If a higher threshold is met the directed amount of power may correspond to a full open valve 511. Multiple time constants may also (independently or additionally) be preset for different corresponding valve 511 function levels. Optionally the valve 511 may be of a type described in US patent no. 6,073,736. Optionally, the valve control / power circuit may be configured and operable in a manner such as disclosed in US patent nos. 5,971,116 and 6,073,736, or by any other means or method disclosed herein or any suitable combinations or portions thereof.

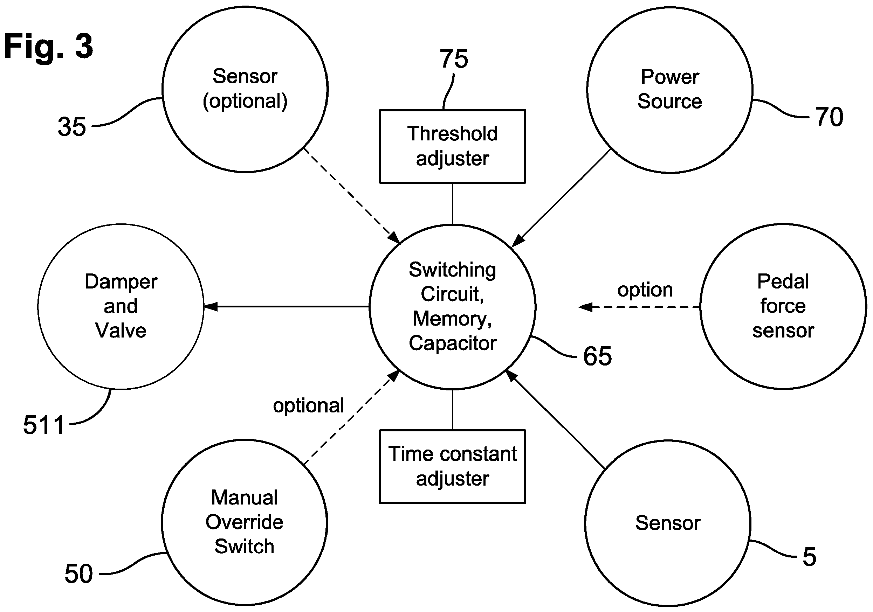

In one embodiment, a manual lock (or unlock or both) device is provided in a location convenient for user manipulation during vehicle operation. In one embodiment such a signal generating device 50 is provided on the handlebar of a bicycle 101 (or other part of the bicycle 101 that is reachable during use). Optionally the signal generating device 50 includes the functions of locking and unlocking valve 511, and (if applicable) adjusting threshold(s) 75 and adjusting time constant(s) all as shown in Figure 3. Thus at its simplest, the device 50 allows the user to remotely lock/unlock the rear shock 25 (and/or the front shock 80) at will. The signal generating device 50 may cause both front and rear shocks to lock/unlock together, or it may permit the user to lock/unlock each shock independently.

In one embodiment the signal generating device 50 comprises a lever that is shiftable by the user of the vehicle. The lever may shift between first and second positions (each corresponding to a 'lock' and 'unlock' command to the damping assembly). Alternatively the lever may move away from a first position and then back to that position to switch between locked and unlocked; such movement may be similar to the way indexed gear shifters operate.

In one embodiment, the signal generating device 50 comprises a digital device provided with buttons and/or a touchscreen enabling the user to lock and unlock the damping assembly at will. The functionality of the signal generating device 50 may be incorporated into performance recording devices, such as, but not limited to, the GARMIN EDGE(RTM) series of devices.

In other embodiments, the signal generating device 50 may provide additional functionality to enable to user to remotely control the rear and/or front shock more finely. For example, the signal generating device 50 may permit the user to remotely set a shock (i.e. the amount that the intensifier valve 511 is open/closed) at one of a number of predefined indexed positions between locked and unlocked, or may permit the user set the shock at substantially any position between those two limits. For example the position of the valve 100 may correspond with a position of an indicator on the signal generating device 50. The indicator may be a visual indication (e.g. digital indicator), or a physical indicator (e.g. position of a lever between two limit positions).

The default position of the intensifier valve 511 may be either open or closed, or somewhere in between. In one embodiment valve 511 is default set open. In one embodiment the actuator moves the valve in one direction from its default or bias and it returns to bias by means of a spring or other suitable biasing mechanism when the actuator ceases to function. Controller 65 monitors sensor 5 and/or 35 and after a time period of input corresponding to below threshold sensor output the processor direct power to 511 sufficient to close the valve (the electromagnetic or voice coil being reversed by power input and the spring 118 set as a tensile spring to hold the valve 511 open by default). Optionally (or independently and absent the sensors 5 and 35) the manual switch 50 communicates a signal to the controller 65 and that causes the controller 65 to direct power from source 70 to valve 511 thereby closing valve 511 completely or partially as desired. Optionally, a rider of the bicycle 101 may manipulate the signal generating device 50 to direct the valve 511 (100) to close, to open, to throttle at intermediate positions, as desired while operating the bicycle 101 or varying terrain (to eliminate pedal bob or maximize ride comfort or traction).

Some or all of components of embodiments herein including sensors and switches, controller 65, shock absorber 25, and valve 511/100 at terminals 150 or 151, may be interconnected or connected by wire 30, wireless, WAN, LAN, Bluetooth, WiFi, ANT, GARMIN(RTM) low power usage protocol, or any suitable power or signal transmitting mechanism. It is particularly desirable in certain embodiments that the signal generating device 50 can communicate wirelessly with the controller 65. An output electric signal from the signal generating device 50 is transmitted to the controller 65. The controller 65 responds to that signal by adjusting the damping rate of the damping assembly to lock or unlock, and/or set at some intermediate level according to the output electric signal.

In one embodiment the rear shock absorber 25 further operates with mechanically variable damping and/or spring features when the valve 511 is open or partially open. In one embodiment the "lock out" valve 511 is positioned in series with the intensifier valve 510 of US patent 7,374,028 so that fluid must traverse both valves between the damper channel 636 and the compensator chamber 154. In operation, the damping function of the shock absorber 25 is consistent with the operation of the intensifier valve 510 when the lock valve 511 is open. Other mechanical shock absorber functions may also be integrated with the present disclosure such that the shock absorber 25 is highly versatile and functional when valve 511 is open. Such features are disclosed for example in US provisional patent application serial number 61/157,541 and any individual or combination of the features disclosed therein is suitable for combination with embodiments of this present disclosure. In one embodiment of operation it is desirable to have the features of a highly versatile yet robust mechanically adjustable shock absorber in combination with the electric lock out presently disclosed.

In one embodiment, the controller 65 takes a derivative of the acceleration for forecasting and implementing adjustment of valve 511 (rebound issue is a big deal). For example, if a bump is encountered followed immediately by a dip, it may be desirable to have the rebound of the tire into the dip (terrain following for traction advantage) occur very rapidly. If the valve 511 were opened to an intermediate state as determined by the controller 65, for the bump an immediately following large magnitude reversal of the derivative of the acceleration (as input from the sensor 5) may indicate that the processor direct the power source to full opening of the valve 511 to allow maximum rebound velocity. The controller 65 may also compare input from sensor 35 and sensor 5 to determine optimum setting position for valve 511. For example, if input from sensor 35 is relatively low in magnitude the processor may open valve 511 gradually until some increase in 35 is noted and then close 511 back slightly from that. In one embodiment if input from sensor 35 is consistent in frequency with input from a pedal force sensor (e.g. US patent no. 5,027,303), the controller 65 may direct a closure of valve 511 until such synchronization is eliminated or reduced.

It is noted that embodiments herein of shock absorber 25 and related systems are equally applicable to vehicle, such as bicycle, front forks 80. Further, it is contemplated that a bicycle 101 may include both shock absorber 25 and fork 80, both of which having some or all of the features disclosed herein.

While the foregoing is directed to embodiments of the present invention, other and further embodiments of the invention may be implemented without departing from the scope of the invention, and the scope thereof is determined by the claims that follow.

## Claims

1. A vehicle comprising a sprung portion (40), an unsprung portion (60) and a vehicle suspension system, which vehicle suspension system comprises:
a terrain sensor (5) mounted on the unsprung part of the vehicle, which terrain sensor, in use, provides an output indicating the acceleration of the unsprung part of the vehicle caused by bumps and dips in terrain;
an electronically adjustable damping assembly (30; 510; 511) mounted between the sprung portion and the unsprung portion, said electronically adjustable damping assembly comprising an electronically adjustable valve for controlling a damping rate of the electronically adjustable damping assembly;
a power source (70) for providing power to adjust the electronically adjustable valve; and
a controller (65) comprising a processor for directing a position of the electronically adjustable valve (511) in response to input from the terrain sensor, wherein a default position of the valve (511) is a closed position and the valve will throttle open corresponding to power routed by controller from the power source to the valve;
**characterised in that**, in use, the controller (65) compares the output from the sensor (5) to a magnitude comparator value over time, the magnitude comparator value having a user-adjustable time constant, and if the output remains above the magnitude comparator value for a time period set by the user-adjustable time constant, the controller (65) routes power from the power source (70) to the valve (511) to throttle it open and, when the output from the sensor (5) falls below the magnitude comparator value, the controller shuts off the power to the valve.

2. A vehicle as claimed in claim 1, wherein the controller (65) is adapted to taper power off over a selectable period of time as part of the shut off.

3. A vehicle as claimed in claim in claim 1 or 2, wherein multiple magnitude comparator values may be set in the controller (65) wherein, in use, different amounts of power are routed by the controller (65) from the power source (70) to the valve (511) according to which magnitude comparator value is exceeded for the time period by the output from the sensor (5).

4. A vehicle as claimed in claim 3, wherein in use if only a lower magnitude comparator value is exceeded, the controller (65) routes an amount of power from the power source (70) to cause a partial opening of the valve (511), and if a higher magnitude comparator value is exceeded the directed amount of power may correspond to a full opening of the valve (511).

5. A vehicle as claimed in claim 3 or 4, wherein the controller stores multiple user-adjustable time constants, each user-adjustable time constant corresponding to one of said magnitude comparator values, whereby different valve function levels are provided.

6. A vehicle as claimed in any preceding claim, further comprising a user-operable device remote from said controller, wherein control of said electronically adjustable damping assembly by said controller may be overridden and/or adjusted using said user-operable device.

7. A vehicle as claimed in claim 6, wherein said user-operable device is reachable by the user during use of the vehicle.

8. A vehicle as claimed in claim 6 or 7, wherein said user-operable device comprises a wireless transmitter for transmitting an output signal and said controller comprises a wireless receiver for receiving said output signal.

9. A vehicle as claimed in claim 6, 7 or 8, wherein said user-operable device comprises a digital device provided with buttons and/or a touchscreen enabling the user to lock and unlock the electronically adjustable damping assembly at will.

10. A vehicle as claimed in claim 6, wherein said user-operable device comprises a performance recording device.

11. A vehicle as claimed in any preceding claim, wherein said vehicle is a bicycle, trail bike, mountain bike, all-terrain bike, motorcycle, all-terrain vehicle, 4 wheel drive dune buggy, watercraft or snowmobile.

12. A vehicle suspension system comprising:
a terrain sensor (5) mountable on an unsprung part of a vehicle, which terrain sensor, in use, provides an output indicating the acceleration of the unsprung part of the vehicle caused by bumps and dips in terrain;
an electronically adjustable damping assembly (30; 510; 511) mountable between the sprung portion and the unsprung portion, said electronically adjustable damping assembly comprising an electronically adjustable valve for controlling a damping rate of the electronically adjustable damping assembly;
a power source (70) for providing power to adjust the electronically adjustable valve; and
a controller (65) comprising a processor for directing a position of the electronically adjustable valve (511) in response to input from the terrain sensor, wherein a default position of the valve (511) is a closed position and the valve will throttle open corresponding to power routed by controller from the power source to the valve;
**characterised in that**, in use, the controller (65) compares the output from the sensor (5) to a magnitude comparator value over time, the magnitude comparator value having a user-adjustable time constant, and if the output remains above the magnitude comparator value for a time period set by the user-adjustable time constant, the controller (65) routes power from the power source (70) to the valve (511) to throttle it open and, when the output from the sensor (5) falls below the magnitude comparator value, the controller shuts off the power to the valve.

13. A vehicle suspension system as claimed in claim 12, wherein the controller (65) is adapted to taper power off over a selectable period of time as part of the shut off.

14. A vehicle suspension system as claimed in claim in claim 12 or 13, wherein multiple magnitude comparator values may be set in the controller (65) wherein, in use, different amounts of power are routed by the controller (65) from the power source (70) to the valve (511) according to which magnitude comparator value is exceeded for the time period by the output from the sensor (5).

15. A vehicle suspension system as claimed in claim 14, wherein in use if only a lower magnitude comparator value is exceeded, the controller (65) routes an amount of power from the power source (70) to cause a partial opening of the valve (511), and if a higher magnitude comparator value is exceeded the directed amount of power may correspond to a full opening of the valve (511).

## Patentansprüche

1. Fahrzeug, umfassend einen gefederten Teil (40), einen ungefederten Teil (60) und ein Fahrzeugaufhängungssystem, wobei das Fahrzeugaufhängungssystem umfasst:
einen Geländesensor (5), der an dem ungefederten Teil des Fahrzeugs angebracht ist, wobei der Geländesensor im Gebrauch ein Ausgangssignal bereitstellt, das die Beschleunigung des ungefederten Teils des Fahrzeugs anzeigt, die durch Erhebungen und Senken im Gelände verursacht wird;
eine elektronisch einstellbare Dämpfungsbaugruppe (30; 510; 511), die zwischen dem gefederten Teil und dem ungefederten Teil angebracht ist, wobei die elektronisch einstellbare Dämpfungsbaugruppe ein elektronisch einstellbares Ventil zum Steuern einer Dämpfungsrate der elektronisch einstellbaren Dämpfungsbaugruppe umfasst;
eine Stromquelle (70) zum Bereitstellen von Strom zum Einstellen des elektronisch einstellbaren Ventils; und
eine Steuereinrichtung (65), die einen Prozessor umfasst, um eine Position des elektronisch einstellbaren Ventils (511) in Reaktion auf eine Eingabe von dem Geländesensor anzusteuern, wobei eine Standardposition des Ventils (511) eine geschlossene Position ist und das Ventil sich entsprechend der von der Steuereinrichtung von der Stromquelle zu dem Ventil geleiteten Strom öffnen wird;
**dadurch gekennzeichnet, dass** die Steuereinrichtung (65) im Gebrauch das Ausgangssignal von dem Sensor (5) mit einem Größenvergleichswert über die Zeit vergleicht, wobei der Größenvergleichswert eine von dem Benutzer einstellbare Zeitkonstante aufweist, und falls das Ausgangssignal für eine Zeitspanne, die durch die von dem Benutzer einstellbare Zeitkonstante festgelegt ist, über dem Größenvergleichswert bleibt, die Steuereinrichtung (65) Strom von der Stromquelle (70) zu dem Ventil (511) leitet, um es zu öffnen, und wenn der Ausgang von dem Sensor (5) unter den Größenvergleichswert fällt, die Steuereinrichtung den Strom zu dem Ventil abschaltet.

2. Fahrzeug nach Anspruch 1, wobei die Steuereinrichtung (65) geeignet ist, als Teil der Abschaltung den Strom über eine wählbare Zeitspanne allmählich zu verringern.

3. Fahrzeug nach Anspruch 1 oder 2, wobei in der Steuereinrichtung (65) mehrere Größenvergleichswerte festgelegt werden können, wobei von der Steuereinrichtung (65) im Gebrauch unterschiedliche Strombeträge von der Stromquelle (70) zu dem Ventil (511) geleitet werden, je nachdem, welcher Größenvergleichswert für die Zeitspanne durch die Ausgabe von dem Sensor (5) überschritten wird.

4. Fahrzeug nach Anspruch 3, wobei die Steuereinrichtung (65) im Gebrauch, falls nur ein niedrigerer Größenvergleichswert überschritten wird, einen Strombetrag von der Stromquelle (70) leitet, um ein teilweises Öffnen des Ventils (511) zu bewirken, und falls ein höherer Größenvergleichswert überschritten wird, der gesteuerte Strombetrag einem vollständigen Öffnen des Ventils (511) entsprechen kann.

5. Fahrzeug nach Anspruch 3 oder 4, wobei die Steuereinrichtung mehrere von dem Benutzer einstellbare Zeitkonstanten speichert, wobei jede von dem Benutzer einstellbare Zeitkonstante einem der Größenvergleichswerte entspricht, wodurch unterschiedliche Ventilfunktionsstufen bereitgestellt sind.

6. Fahrzeug nach einem der vorangegangenen Ansprüche, umfassend ferner eine von der Steuereinrichtung entfernte vom Benutzer bedienbare Vorrichtung, wobei die Steuerung der elektronisch einstellbaren Dämpfungsanordnung durch die Steuereinrichtung unter Verwendung der vom Benutzer bedienbaren Vorrichtung übersteuert und/oder angepasst werden kann.

7. Fahrzeug nach Anspruch 6, wobei die vom Benutzer bedienbare Vorrichtung während der Benutzung des Fahrzeugs für den Benutzer erreichbar ist.

8. Fahrzeug nach Anspruch 6 oder 7, wobei die vom Benutzer bedienbare Vorrichtung einen drahtlosen Sender zum Senden eines Ausgangssignals umfasst und die Steuereinrichtung einen drahtlosen Empfänger zum Empfangen des Ausgangssignals umfasst.

9. Fahrzeug nach Anspruch 6, 7 oder 8, wobei die vom Benutzer bedienbare Vorrichtung eine digitale Vorrichtung umfasst, die mit Tasten und/oder einem Touchscreen versehen ist und es dem Benutzer ermöglicht, die elektronisch einstellbare Dämpfungsbaugruppe nach Belieben zu verriegeln und zu entriegeln.

10. Fahrzeug nach Anspruch 6, wobei die vom Benutzer bedienbare Vorrichtung eine Leistungsaufzeichnungsvorrichtung umfasst.

11. Fahrzeug nach einem der vorangegangenen Ansprüche, wobei das Fahrzeug ein Fahrrad, Trail-Bike, Mountain-Bike, Geländefahrrad, Motorrad, Geländewagen, Allradantriebs-Dünen-Buggy, Wasserfahrzeug oder Schneemobil ist.

12. Fahrzeugaufhängungssystem, umfassend:
einen Geländesensor (5), der an einem ungefederten Teil eines Fahrzeugs angebracht ist, wobei der Geländesensor im Gebrauch ein Ausgangssignal bereitstellt, das die Beschleunigung des ungefederten Teils des Fahrzeugs anzeigt, die durch Erhebungen und Senken im Gelände verursacht wird;
eine elektronisch einstellbare Dämpfungsbaugruppe (30; 510; 511), die zwischen dem gefederten Teil und dem ungefederten Teil angebracht ist, wobei die elektronisch einstellbare Dämpfungsbaugruppe ein elektronisch einstellbares Ventil zum Steuern einer Dämpfungsrate der elektronisch einstellbaren Dämpfungsbaugruppe umfasst;
eine Stromquelle (70) zum Bereitstellen von Strom zum Einstellen des elektronisch einstellbaren Ventils; und
eine Steuereinrichtung (65), die einen Prozessor umfasst, um eine Position des elektronisch einstellbaren Ventils (511) in Reaktion auf eine Eingabe von dem Geländesensor anzusteuern, wobei eine Standardposition des Ventils (511) eine geschlossene Position ist und das Ventil sich entsprechend der von der Steuereinrichtung von der Stromquelle zu dem Ventil geleiteten Strom öffnen wird;
**dadurch gekennzeichnet, dass** die Steuereinrichtung (65) im Gebrauch das Ausgangssignal von dem Sensor (5) mit einem Größenvergleichswert über die Zeit vergleicht, wobei der Größenvergleichswert eine von dem Benutzer einstellbare Zeitkonstante aufweist, und falls das Ausgangssignal für eine Zeitspanne, die durch die von dem Benutzer einstellbare Zeitkonstante festgelegt ist, über dem Größenvergleichswert bleibt, die Steuereinrichtung (65) Strom von der Stromquelle (70) zu dem Ventil (511) leitet, um es zu öffnen, und wenn der Ausgang von dem Sensor (5) unter den Größenvergleichswert fällt, die Steuereinrichtung den Strom zu dem Ventil abschaltet.

13. Fahrzeugaufhängungssystem nach Anspruch 12, wobei die Steuereinrichtung (65) geeignet ist, als Teil der Abschaltung den Strom über eine wählbare Zeitspanne allmählich zu verringern.

14. Fahrzeugaufhängungssystem nach Anspruch 12 oder 13, wobei in der Steuereinrichtung (65) mehrere Größenvergleichswerte festgelegt werden können, wobei im Gebrauch von der Steuereinrichtung (65) unterschiedliche Strombeträge von der Stromquelle (70) zu dem Ventil (511) geleitet werden, je nachdem, welcher Größenvergleichswert für die Zeitspanne von dem Ausgangssignal von dem Sensor (5) überschritten wird.

15. Fahrzeugaufhängungssystem nach Anspruch 14, wobei die Steuereinrichtung (65) im Gebrauch, falls nur ein niedrigerer Größenvergleichswert überschritten wird, einen Strombetrag von der Stromquelle (70) leitet, um ein teilweises Öffnen des Ventils (511) zu bewirken, und falls ein höherer Größenvergleichswert überschritten wird, der gesteuerte Strombetrag einem vollständigen Öffnen des Ventils (511) entsprechen kann.

## Revendications

1. Véhicule comprenant une portion suspendue (40), une portion non suspendue (60) et un système de suspension de véhicule, lequel système de suspension de véhicule comprend :
un capteur de terrain (5) monté sur la partie non suspendue du véhicule, lequel capteur de terrain, en utilisation, fournit une sortie indiquant l'accélération de la partie non suspendue du véhicule provoquée par des bosses et des creux dans le terrain ;
un ensemble d'amortissement ajustable électroniquement (30 ; 510 ; 511) monté entre la portion suspendue et la portion non suspendue, ledit ensemble d'amortissement ajustable électroniquement comprenant une soupape ajustable électroniquement pour commander un taux d'amortissement de l'ensemble d'amortissement ajustable électroniquement ;
une source de puissance (70) pour fournir une puissance afin d'ajuster la soupape ajustable électroniquement ; et
un dispositif de commande (65) comprenant un processeur pour diriger une position de la soupape ajustable électroniquement (511) en réponse à une entrée provenant du capteur de terrain, dans lequel une position par défaut de la soupape (511) est une position fermée et la soupape va s'ouvrir par étranglement avec une puissance acheminée par le dispositif de commande de la source de puissance à la soupape ;
**caractérisé en ce que**, en utilisation, le dispositif de commande (65) compare la sortie provenant du capteur (5) à une valeur de comparateur de grandeur en fonction du temps, la valeur de comparateur de grandeur ayant une constante de temps ajustable par l'utilisateur, et si la sortie demeure au-dessus de la valeur de comparateur de grandeur pendant une période de temps établie par la constante de temps ajustable par l'utilisateur, le dispositif de commande (65) achemine une puissance de la source de puissance (70) à la soupape (511) pour l'ouvrir par étranglement et, lorsque la sortie provenant du capteur (5) tombe sous la valeur de comparateur de grandeur, le dispositif de commande coupe la puissance à la soupape.

2. Véhicule selon la revendication 1, dans lequel le dispositif de commande (65) est adapté pour diminuer la puissance sur une période de temps sélectionnable dans le cadre de la coupure.

3. Véhicule selon la revendication 1 ou 2, dans lequel de multiples valeurs de comparateur de grandeur peuvent être établies dans le dispositif de commande (65) dans lequel, en utilisation, des quantités différentes de puissance sont acheminées par le dispositif de commande (65) de la source de puissance (70) à la soupape (511) selon la valeur de comparateur de grandeur qui est dépassée pendant la période de temps par la sortie provenant du capteur (5).

4. Véhicule selon la revendication 3, dans lequel en utilisation si seulement une valeur de comparateur de grandeur inférieure est dépassée, le dispositif de commande (65) achemine une quantité de puissance provenant de la source de puissance (70) pour provoquer une ouverture partielle de la soupape (511), et si une valeur de comparateur de grandeur supérieure est dépassée la quantité de puissance dirigée peut correspondre à une ouverture totale de la soupape (511).

5. Véhicule selon la revendication 3 ou 4, dans lequel le dispositif de commande stocke de multiples constantes de temps ajustables par l'utilisateur, chaque constante de temps ajustable par l'utilisateur correspondant à l'une desdites valeurs de comparateur de grandeur, moyennant quoi des niveaux de fonction de soupape différents sont fournis.

6. Véhicule selon l'une quelconque des revendications précédentes, comprenant en outre un dispositif actionnable par l'utilisateur distant dudit dispositif de commande, dans lequel une commande dudit ensemble d'amortissement ajustable électroniquement par ledit dispositif de commande peut être surpassée et/ou ajustée à l'aide dudit dispositif actionnable par l'utilisateur.

7. Véhicule selon la revendication 6, dans lequel ledit dispositif actionnable par l'utilisateur peut être atteint par l'utilisateur pendant l'utilisation du véhicule.

8. Véhicule selon la revendication 6 ou 7, dans lequel ledit dispositif actionnable par l'utilisateur comprend un émetteur sans fil pour émettre un signal de sortie et ledit dispositif de commande comprend un récepteur sans fil pour recevoir ledit signal de sortie.

9. Véhicule selon la revendication 6, 7 ou 8, dans lequel ledit dispositif actionnable par l'utilisateur comprend un dispositif numérique muni de boutons et/ou d'un écran tactile permettant à l'utilisateur de verrouiller et déverrouiller l'ensemble d'amortissement ajustable électroniquement selon son souhait.

10. Véhicule selon la revendication 6, dans lequel ledit dispositif actionnable par l'utilisateur comprend un dispositif d'enregistrement de performance.

11. Véhicule selon l'une quelconque des revendications précédentes, dans lequel ledit véhicule est une bicyclette, un vélo de trail, un vélo de montagne, un vélo tout-terrain, une motocyclette, un véhicule tout-terrain, une motodune à 4 roues motrices, une motomarine ou une motoneige.

12. Système de suspension de véhicule comprenant :
un capteur de terrain (5) pouvant être monté sur une partie non suspendue d'un véhicule, lequel capteur de terrain, en utilisation, fournit une sortie indiquant l'accélération de la partie non suspendue du véhicule provoquée par des bosses et des creux dans le terrain ;
un ensemble d'amortissement ajustable électroniquement (30 ; 510 ; 511) pouvant être monté entre la portion suspendue et la portion non suspendue, ledit ensemble d'amortissement ajustable électroniquement comprenant une soupape ajustable électroniquement pour commander un taux d'amortissement de l'ensemble d'amortissement ajustable électroniquement ;
une source de puissance (70) pour fournir une puissance afin d'ajuster la soupape ajustable électroniquement ; et
un dispositif de commande (65) comprenant un processeur pour diriger une position de la soupape ajustable électroniquement (511) en réponse à une entrée provenant du capteur de terrain, dans lequel une position par défaut de la soupape (511) est une position fermée et la soupape va s'ouvrir par étranglement en correspondance avec une puissance acheminée par le dispositif de commande de la source de puissance à la soupape ;
**caractérisé en ce que**, en utilisation, le dispositif de commande (65) compare la sortie provenant du capteur (5) à une valeur de comparateur de grandeur en fonction du temps, la valeur de comparateur de grandeur ayant une constante de temps ajustable par l'utilisateur, et si la sortie demeure au-dessus de la valeur de comparateur de grandeur pendant une période établie par la constante de temps ajustable par l'utilisateur, le dispositif de commande (65) achemine une puissance de la source de puissance (70) à la soupape (511) pour l'ouvrir par étranglement et, lorsque la sortie provenant du capteur (5) tombe sous la valeur de comparateur de grandeur, le dispositif de commande coupe la puissance à la soupape.

13. Système de suspension de véhicule selon la revendication 12, dans lequel le dispositif de commande (65) est adapté pour diminuer la puissance sur une période de temps sélectionnable dans le cadre de la coupure.

14. Système de suspension de véhicule selon la revendication 12 ou 13, dans lequel de multiples valeurs de comparateur de grandeur peuvent être établies dans le dispositif de commande (65) dans lequel, en utilisation, des quantités différentes de puissance sont acheminées par le dispositif de commande (65) de la source de puissance (70) à la soupape (511) selon la valeur de comparateur de grandeur qui est dépassée pendant la période de temps par la sortie provenant du capteur (5).

15. Système de suspension de véhicule selon la revendication 14, dans lequel, en utilisation, si seulement une valeur de comparateur de grandeur inférieure est dépassée, le dispositif de commande (65) achemine une quantité de puissance provenant de la source de puissance (70) pour provoquer une ouverture partielle de la soupape (511), et si une valeur de comparateur de grandeur supérieure est dépassée la quantité dirigée de puissance peut correspondre à une ouverture totale de la soupape (511).
